# EUROPÄISCHE PATENTANMELDUNG

(11) **EP 1 194 015 A1**
(43) Veröffentlichungstag der Anmeldung: **03.04.2002**
(21) Anmeldenummer: 01119847.0
(22) Anmeldetag: 16.08.2001
(51) Int. Cl.: H05B 39/04

(54) **Schaltungsanordnung zur Regelung eines analogen Spannungssignals**

(30) Priorität: 28.09.2000 DE 10048189
(71) Anmelder: Patent-Treuhand-Gesellschaft für elektrische Glühlampen mbH, 81543 München (DE)
(72) Erfinder: Haeusser-Boehm, Helmut, Dr., 81547 München (DE); Schaller, Michael, 83301 Traunreut (DE)

(57) **Zusammenfassung**

Schaltungsanordnung zur Regelung eines analogen Spannungssignals umfassend einen Eingangsanschluß zum Anlegen des analogen Spannungssignals (UE), eine Digitalisiereinheit (10), die aus dem analogen Spannungssignal (UE) ein Digitalsignal (UED) erzeugt, das bei einem Sollwert des analogen Spannungssignals (UE) ein vorgegebenes Tastverhältnis aufweist, einen PI-Regler (12), dem als Eingangssignal ein mit dem Digitalsignal (UED) korreliertes Istsignal und ein Sollsignal (USD) zuführbar sind und an dessen Ausgang ein Steuersignal (UST) zur Regelung des analogen Spannungssignals (UE) derart bereitstellbar ist, daß mit dem Steuersignal (UST) bei einem Tastverhältnis, das kleiner ist als das vorgegebene Tastverhältnis, eine Vergrößerung, bei einem Tastverhältnis, das dem vorgegebenen Tastverhältnis entspricht, ein unverändertes Beibehalten, und bei einem Tastverhältnis, das größer ist als das vorgegebene Tastverhältnis, eine Verkleinerung des analogen Spannungssignals bewirkbar ist.

## Beschreibung

Die vorliegende Erfindung betrifft eine Schaltungsanordnung zur Regelung eines analogen Spannungssignals.

Beispielsweise bei Halogenlampen ist die exakte Einhaltung der vorgeschriebenen Lampenspannung Grundvoraussetzung für eine hohe Lebensdauer. Eine Überschreitung der vorgeschriebenen Lampenspannung um 5 - 10 % reduziert die Lebensdauer von Halogenlampen um etwa 50 %.

Bei aus dem Stand der Technik bekannten Transformatoren für Halogenlampen existiert eine Rückkopplung der Lampenlast auf die Frequenz. Ist beispielsweise die Lampenlast hoch, sinkt die Betriebsfrequenz, während für den Fall niedriger Lampenlast die Betriebsfrequenz steigt. Durch die Streuinduktivität des Transformators entsteht ein frequenzabhängiger Spannungsabfall, so dass die Ausgangsspannung, die dann der Lampe bereitgestellt wird, nahezu konstant bleibt.

Der vorliegenden Erfindung liegt die Aufgabe zugrunde, eine Schaltungsanordnung bereitzustellen, die auf einfache Art und Weise die Regelung eines analogen Spannungssignals ermöglicht.

Diese Aufgabe wird erfindungsgemäß gelöst durch eine Schaltungsanordnung zur Regelung eines analogen Spannungssignals, die einen Eingangsanschluss zum Anlegen des analogen Spannungssignals umfasst, weiterhin eine Digitalisiereinheit, die aus dem analogen Spannungssignal ein Digitalsignal erzeugt, das bei einem Sollwert des analogen Spannungssignals ein vorgegebenes Tastverhältnis aufweist, sowie einen PI-Regler, dem als Eingangssignal ein mit dem Digitalsignal korreliertes Istsignal und ein Sollsignal zuführbar sind und an dessen Ausgang ein Steuersignal zur Regelung des analogen Spannungssignals derart bereitstellbar ist, dass mit dem Steuersignal bei einem Tastverhältnis, das kleiner ist als das vorgegebene Tastverhältnis eine Vergrößerung, bei einem Tastverhältnis, das dem vorgegebenen Tastverhältnis entspricht, ein unverändertes Beibehalten und bei einem Tastverhältnis, das größer ist als das vorgegebene Tastverhältnis eine Verkleinerung des analogen Spannungssignals bewirkbar ist.

Der vorliegenden Erfindung liegt die Erkenntnis zugrunde, dass die Lampenspannung auch bei unterschiedlichen Netzspannungen und Lampenlasten konstant gehalten werden kann, wenn die gegenwärtige Lampenspannung erfasst und daraus ein geeignetes Steuersignal abgeleitet wird, das dann zur entsprechenden Steuerung der Frequenz, der Phase, des Dutycycles oder einer anderen geeigneten Größe verwendet werden kann, um die Ausgangsspannung auf dem Sollwert zu halten. Bevorzugter Einsatzbereich sind insbesondere fremdgesteuerte Halbbrückenschaltungen.

Die erfindungsgemäße Lösung zeichnet sich dadurch aus, dass sie sehr kostengünstig zu realisieren ist und eine Erfassung der Lampenspannung sowie deren Ausregelung auf eine Weise ermöglicht, die nahezu unabhängig von Bauteiletoleranzen ist.

Für den Fall, dass das analoge Spannungssignal noch nicht in gleichgerichteter Form vorliegt, ist zwischen dem Eingangsanschluss und der Digitalisiereinheit eine Vorrichtung zum Gleichrichten des analogen Spannungssignals vorzusehen.

Der PI-Regler weist eine Zeitkonstante Tp auf, wobei das Digitalsignal ein Signal, insbesondere ein Rechtecksignal, mit einer Frequenz fd > 1/Tp ist, insbesondere ein Vielfaches davon beträgt. Durch eine derartige Dimensionierung ist sichergestellt, dass die Regelung nicht hektisch erfolgt, das heisst auch unmassgebliche hochfrequente Störungen berücksichtigt würden, sondern dass die Regelung gleichmäßig und massvoll erfolgt.

Bevorzugt umfasst die Digitalisiereinheit einen Spannungsteiler, mit dem ein mit dem analogen Eingangsspannungssignal korrespondierendes Teileingangspannungssignal erzeugbar ist, eine Serienschaltung mit einer Zenerdiode und einem Widerstand, dem das Teileingangsspannungssignal zuführbar ist, und ein Schaltelement, dem das Signal am Verbindungspunkt zwischen Zenerdiode und Widerstand als Steuersignal zuführbar ist. Eine derartige Realisierung einer Digitalisiereinheit ermöglicht auf besonders einfache Weise die Variation des vorgegebenen Tastverhältnisses, und zwar durch andere Dimensionierung des Spannungsteilers. Daraus resultiert eine universelle Einsetzbarkeit der erfindungsgemäßen Schaltungsanordnung für die Regelung einer Vielzahl unterschiedlicher analoger Spannungssignale.

Bei einer besonders bevorzugten Weiterbildung ist zwischen der Digitalisiereinheit und dem PI-Regler ein Optokoppler angeordnet. Durch den Optokoppler wird die galvanische Trennung zwischen Eingang und Ausgang der Schaltungsanordnung sichergestellt, und der Einsatz der erfindungsgemäßen Schaltungsanordnung auch in Schaltungen ermöglicht, die sogenannten SELV (Secure Extra Low Voltage)-Bedingungen genügen müssen. Bevorzugt ist hierbei der Optokoppler seriell zu einem Ausgangsanschluss des Schaltelements geschaltet. Wird beispielsweise das Schaltelement als Transistor realisiert, wird die Leuchteinheit des Optokopplers vom Transistorstrom durchflossen und die Lichtabgabe ist mit dem Digitalsignal korreliert.

Weiterhin bevorzugt wird das Ausgangssignal des Optokopplers, beispielsweise die von einem im Optokoppler angeordnete Phototransistor gelieferte Spannung, dazu verwendet, um das Istsignal für den PI-Regler zu erzeugen.

Das Tastverhältnis, das geregelt werden soll, wird bevorzugt durch Variation des dem PI-Regler zugeführten Sollsignals eingestellt. Das Tastverhältnis kann beispielsweise 50:50 betragen.

Bei einem bevorzugten Ausführungsbeispiel ist der PI-Regler als invertierender PI-Regler realisiert, das heisst das Sollsignal ist mit dem Plus-Eingang des im PI-Regler vorhandenen Operationsverstärkers verbunden, während das Istsignal mit dem Minus-Eingang des Operationsverstärkers verbunden ist.

Weitere vorteilhafte Ausführungsformen ergeben sich aus den Unteransprüchen.

Im Nachfolgenden werden Ausführungsbeispiele der Erfindung unter Bezugnahme auf die beigefügten Zeichnungen näher beschrieben. Es stellen dar:
Figur 1 in schematischer Blockschaltbilddarstellung eine erste Auführungsform einer erfindungsgemäßen Schaltungsanordnung;
Figur 2 in schematischer Blockschaltbilddarstellung eine zweite Ausführungsform einer erfindungsgemäßen Schaltungsanordung; und
Figur 3 das Schaltbild einer dritten Ausführungsform einer erfindungsgemäßen Schaltungsanordnung.

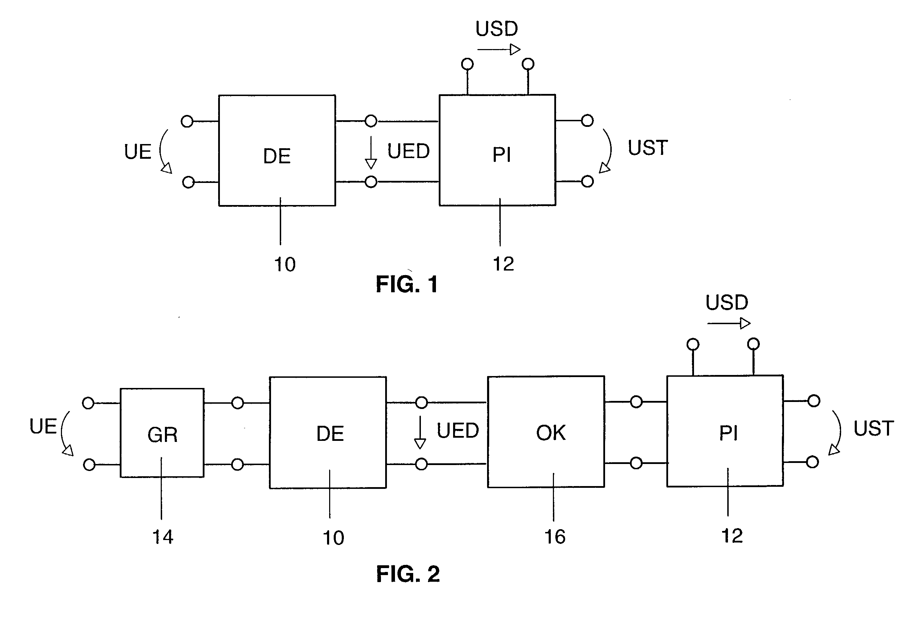

In Figur 1 ist in Blockschaltbilddarstellung eine erste Ausführungsform einer erfindungsgemäßen Schaltungsanordnung gezeigt. Sie umfasst eine Digitalisiereinheit 10, der eingangsseitig das zu regelnde analoge Spannungssignal UE zugeführt wird. Bei dem zu regelnden analogen Spannungssignal UE kann es sich insbesondere um ein gleichgerichtetes Sinusspannungssignal handeln. Am Ausgang der Digitalisierungseinheit 10 wird eine digitale Form UED des analogen Spannungssignals UE bereitgestellt, wobei das Digitalsignal UED bei einem vorgebbaren Sollwert des analogen Spannungssignals UE ein vorgegebenes Tastverhältnis aufweist. Einem PI-Regler 12 wird das Digitalsignal UED oder ein Signal, das damit korreliert ist, als Istsignal zugeführt. Als Sollsignal wird dem PI-Regler 12 ein Signal USD zugeführt. An seinem Ausgang stellt der PI-Regler 12 ein Steuersignal UST bereit, das zur Regelung des analogen Spannungssignals UE verwendbar ist. Insbesondere lässt sich mit dem Steuersignal UST beipielsweise die Frequenz, die Phase, der Duty Cycle oder eine andere Grösse beeinflussen, um das analoge Spannungssignal UE zu beeinflussen. Das vom PI-Regler 12 bereitgestellte Steuersignal ist so geartet, dass mit dem Steuersignal mit einem Tastverhältnis, das kleiner ist als das vorgegebene Tastverhältnis, eine Vergrößerung, bei einem Tastverhältnis, das dem vorgegebenen Tastverhältnis entspricht, ein unverändertes Beibehalten, und bei einem Tastverhältnis das größer ist als das vorgegebene Tastverhältnis, eine Verkleinerung des analogen Spannungssignals UE bewirkbar ist.

Bei den in den Figuren 1 bis 3 dargestellten Ausführungsformen der Erfindung sind sich entsprechende Bauelemente mit denselben Bezugszeichen bezeichnet.

Figur 2 zeigt eine zweite Ausführungsform einer erfindungsgemäßen Schaltunganordnung. Sie umfasst wiederum eine Digitalisiereinheit 10 und einen PI-Regler 12. Zwischen dem Eingangsanschluss für das analoge Spannungssignal UE ist jedoch ein Gleichrichter 14 geschaltet, der dazu dient, das analoge Spannungssignal UE gleichzurichten. Zwischen der Digitalisiereinheit 10 und dem PI-Regler 12 ist ein Optokoppler 16 geschaltet, dessen Aufgabe darin besteht, insbesondere im Hinblick auf die SELV-Bedingung, eine galvanische Trennung zwischen Eingang und Ausgang der Schaltungsanordnung sicherzustellen.

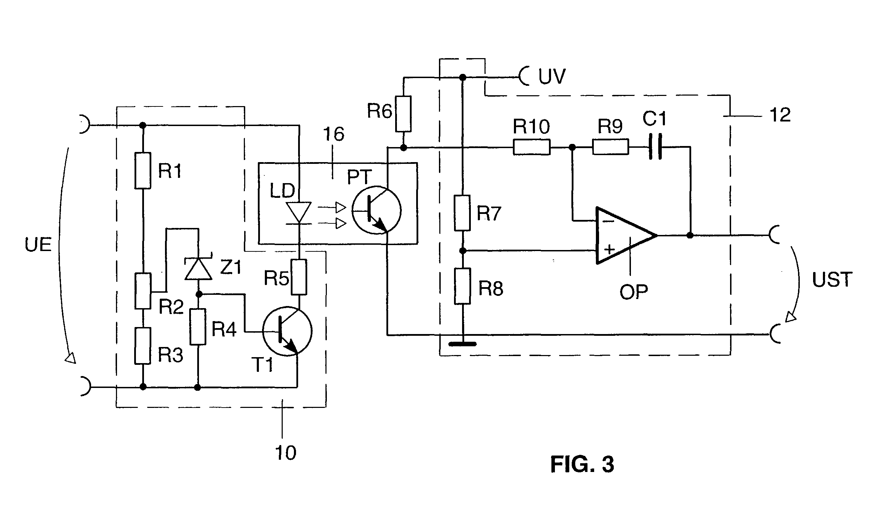

In Figur 3 ist eine dritte Ausführungsform einer erfindungsgemäßen Schaltungsanordnung schematisch als Schaltbild dargestellt. Der Digitalisiereinheit 10 wird wiederum das analoge Spannungssignal UE, vorliegend bereits in gleichgerichteter Form, zugeführt. In der Digitalisiereinheit 10 wird das analoge Spannungssignal UE zunächst einem Spannungsteiler umfassend die Widerstände R1, R2, R3 zugeführt, wobei der Widerstand R2 dazu ausgelegt ist, das Teilungsverhältnis zu variieren. Die heruntergeteilte Spannung wird der Serienschaltung einer Zenerdiode Z1 und einem Widerstand R4 zugeführt. Bevorzugt ist die Zenerdiode Z1 so gewählt, dass sie nahezu unabhängig von der Temperatur ist. Der Verbindungspunkt zwischen der Zenerdiode Z1 und dem Widerstand R4 ist mit der Basis eines Transistors T1 verbunden. Der Transistor T1 erhält immer dann ein Eingangssignal, wenn die der Serienschaltung aus der Zenerdiode Z1 und dem Widerstand R4 zugeführte Spannung über dem Wert liegt, der durch die Wahl der Zenerdiode Z1 vorgegeben ist. Für ein gleichgerichtetes Sinussignal mit eine Effektivwert von 11,6 V kann beispielsweise eine Zenerdiode Z1 verwendet werden, die auf 5,1 V dimensioniert ist. Bei einem Sollwert für das Eingangsspannungssignal UE von 11,6 V effektiv wird hierdurch ein Signal mit einem Tastverhältnis von 50:50 eingestellt. Der Kollektor des Transistor T1 ist über einen Widerstand R5 mit einem Optokoppler 16, insbesondere mit der Leuchtdiode LD des Optokopplers 16, verbunden. Im Optokoppler 16 ist in geeigneter Positionierung zur Leuchtdiode LD ein Phototransistor PT angeordnet, wobei die Leuchtdiode LD und der Phototransistor PT weiterhin derart angeordnet sind, dass die SELV-Bedingungen eingehalten werden, insbesondere eine Spannungsfestigkeit von 4 kV erzielt wird. Der Phototransistor PT ist über einen Widerstand R6 mit einer Versorgungsspannung UV verbunden. Der PI-Regler 12 ist so dimensioniert, dass er im Verhältnis zum Rechtecksignal, das am Ausgang der Digitalisiereinheit 10 bereitgestellt wird, eine große Zeitkonstante besitzt. Der PI-Regler umfasst einen Operationsverstärker OP, dessen Plus-Eingang eine Spannung zugeführt wird, die durch einen von den Widerständen R7, R8 gebildeten Spannungsteiler, der mit der Versorgungsspannung UV verbunden ist, einstellbar ist. Werden die Widerstände R7 und R8 identisch gewählt, liegt am Plus-Eingang des Operationsverstärkers OP die halbe Versorgungsspannung an. Der PI-Regler umfasst weiterhin in der Rückkopplungsschleife des Operationsverstärkers OP einen Widerstand R9 und einen Kondensator C1 sowie zwischen dem Optokoppler 16 und dem Minus-Eingang des Operationsverstärkers einen Widerstand R10. Der PI-Regler 12 ist damit als invertierender PI-Regler realisiert, das heisst er integriert auf, wenn das tatsächliche Tastverhältnis kleiner als das vorgegebene Tastverhältnis ist. und er integriert ab, wenn das tatsächliche Tastverhältnis größer als das vorgegebene Tastverhältnis ist. Bei einem aktuellen Tastverhältnis, das dem vorgegebenen Tastverhältnis entspricht, stoppt der PI-Regler seine Integration.

Je nach Wahl der Widerstände R7 und R8 kann das Sollsignal zwischen 0 V und Versorgungsspannung UV eingestellt werden. Eine Invertierung der Sollgrösse kann dadurch erreicht werden, dass der Widerstand R6 am Emitter des Phototransistors PT angeschlossen wird und der Anschluss für R10 entsprechend getauscht wird.

Schwankungen der Versorgungsspannung UV, die sich auf die Präzision des PI-Reglers 12 auswirken würden, kann dadurch begegnet werden, dass der Versorgungsspannungsanschluss mit einer Zenerdiode und einem Vorwiderstand stabilisiert wird.

Das Steuerspannungssignal UST wird bevorzugt dazu verwendet, die Eingangsspannung UE durch Frequenzvariation konstant zu halten. Andere Möglichkeiten der Verwendung des Steuersignals UST zur Regelung der Eingangsspannung UE sind für den Fachmann offensichtlich, beispielsweise Änderung des Phasenanschnitts, Startverzögerung etc..

## Patentansprüche

1. Schaltungsanordnung zur Regelung eines analogen Spannungssignals umfassend
- einen Eingangsanschluß zum Anlegen des analogen Spannungssignals (UE);
- eine Digitalisiereinheit (10), die aus dem analogen Spannungssignal (UE) ein Digitalsignal (UED) erzeugt, das bei einem Sollwert des analogen Spannungssignals (UE) ein vorgegebenes Tastverhältnis aufweist;
- einen PI-Regler (12), dem als Eingangssignal ein mit dem Digitalsignal (UED) korreliertes Istsignal und ein Sollsignal (USD) zuführbar sind und an dessen Ausgang ein Steuersignal (UST) zur Regelung des analogen Spannungssignals (UE) derart bereitstellbar ist, daß mit dem Steuersignal (UST) bei einem Tastverhältnis, das kleiner ist als das vorgegebene Tastverhältnis, eine Vergrößerung, bei einem Tastverhältnis, das dem vorgegebenen Tastverhältnis entspricht, ein unverändertes Beibehalten und bei einem Tastverhältnis, das größer ist als das vorgegebene Tastverhältnis, eine Verkleinerung des analogen Spannungssignals (UE) bewirkbar ist.

2. Schaltungsanordnung nach Anspruch 1,
**dadurch gekennzeichnet,**
**daß** zwischen dem Eingangsanschluß und der Digitalisiereinheit (10) eine Vorrichtung (14) zum Gleichrichten des analogen Spannungssignals (UE) angeordnet ist.

3. Schaltungsanordnung nach Anspruch 1 oder 2,
**dadurch gekennzeichnet,**
**daß** der PI-Regler (12) eine Zeitkonstante Tp aufweist, wobei das Digitalsignal (UED) ein Signal, insbesondere ein Rechtecksignal, mit einer Frequenz fd > 1/Tp ist.

4. Schaltungsanordnung nach einem der Ansprüche 1 bis 3,
**dadurch gekennzeichnet,**
**daß** die Digitalisiereinheit umfasst
- einen Spannungsteiler (r1, r2, r3), mit dem ein mit dem analogen Eingangsspannungssignal (UE) korrespondierendes Teileingangsspannungssignal erzeugbar ist,
- eine Serienschaltung mit einer Zenerdiode (Z1) und einem Widerstand (R4), der das Teileingangsspannungssignal zuführbar ist; und
- ein Schaltelement (T1), dem das Signal am Verbindungspunkt zwischen der Zenerdiode (Z1) und dem Widerstand (R4) als Steuersignal zuführbar ist.

5. Schaltungsanordnung nach einem der vorhergehenden Ansprüche,
**dadurch gekennzeichnet,**
**daß** zwischen der Digitalisiereinheit (10) und dem PI-Regler (12) ein Optokoppler (16) angeordnet ist.

6. Schaltungsanordnung nach Anspruch 5, sofern auf Anspruch 4 rückbezogen,
**dadurch gekennzeichnet,**
**daß** der Optokoppler (16) seriell zu einem Ausgangsanschluß des Schaltelements (T1) geschaltet ist.

7. Schaltungsanordnung nach einem der Ansprüche 5 oder 6,
**dadurch gekennzeichnet,**
**daß** das Istsignal mit dem Ausgangssignal des Optokopplers (16) korreliert ist.

8. Schaltungsanordnung nach einem der vorhergehenden Ansprüche,
**dadurch gekennzeichnet,**
**daß** das Tastverhältnis einstellbar ist, insbesondere durch Variation des dem PI-Regler (12) zugeführten Sollsignals.

9. Schaltungsanordnung nach Anspruch 8,
**dadurch gekennzeichnet,**
**daß** das Tastverhältnis 50:50 beträgt.

10. Schaltungsanordnung nach einem der vorhergehenden Ansprüche,
**dadurch gekennzeichnet,**
**daß** der PI-Regler (12) ein invertierender PI-Regler ist.
